# EUROPÄISCHE PATENTSCHRIFT

(11) **EP 3 290 308 B1**
(45) Veröffentlichungstag und Bekanntmachung des Hinweises auf die Patenterteilung: **20.01.2021**
(21) Anmeldenummer: 17186641.1
(22) Anmeldetag: 17.08.2017
(51) Int. Cl.: B62D 59/04

(54) **BEFESTIGUNGS- UND ABSTÜTZVORRICHTUNG UND ANHÄNGER**
FASTENING AND SUPPORTING DEVICE AND TRAILER
DISPOSITIF DE FIXATION ET D'APPUI ET REMORQUE

(30) Priorität: 19.08.2016 DE 202016104574 U
(43) Veröffentlichungstag der Anmeldung: 07.03.2018
(60) Teilanmeldung: 20201057.5
(73) Patentinhaber: Reich GmbH Regel- und Sicherheitstechnik, 35713 Eschenburg-Wissenbach (DE)
(72) Erfinder: BENDER, Steffen, 35713 Eschenburg (DE)
(74) Vertreter: Hofstetter, Schurack & Partner

(56) Entgegenhaltungen:
- EP-A1- 1 447 312
- EP-A1- 2 810 856
- EP-A2- 2 289 776
- DE-U1-202008 011 794
- US-A1- 2016 059 650

## Beschreibung

Die vorliegende Erfindung betrifft eine Befestigungs- und Abstützvorrichtung zur Befestigung und Abstützung eines Hilfsantriebs an mindestens einem Element eines Stützrahmens eines Anhängers, insbesondere einem Wohnwagen, einem Bootsanhänger, einem Verkaufswagen, einem Transportanhänger oder einem Autotransportanhänger, wobei die Befestigungs- und Abstützvorrichtung mindestens ein erstes, an einem Achsrohrgehäuse angeordnetes erstes Abstützelement für einen Stoßdämpfer des Anhängers umfasst. Die Erfindung betrifft weiterhin einen Anhänger und einen Stützrahmen eines Anhängers mit mindestens einer Befestigungs- und Abstützvorrichtung.

Hilfsantriebe für Anhänger, insbesondere für Wohnwagen, Bootsanhänger, Verkaufswagen, Transportanhänger und ähnliche Anhänger sind in einer großen Vielzahl, z.B aus EP 2 289 776 A2 bekannt. Sie dienen insbesondere dazu, den Anhänger in abgekoppeltem Zustand zu bewegen. Dies betrifft insbesondere Anhänger, die beispielsweise auf Campingplätzen oder Wohnwagen-Parkplätzen bewegt und rangiert werden müssen. Bei diesen bekannten Hilfsantrieben ist mindestens ein Antriebselement, insbesondere eine Antriebswalze mit einem Rad des Anhängers in Eingriff bringbar. Mithilfe entsprechender Antriebseinheiten, zum Beispiel Elektromotoren, wird die Antriebswalze angetrieben, wodurch sich das mit der Antriebswalze in Eingriff befindliche Rad des Anhängers dreht beziehungsweise bewegt. Damit ist ein sicheres Rangieren des Anhängers in abgekoppeltem Zustand möglich. Die US2016/059650 A1 offenbart einen entsprechenden Hilfsantrieb für Anhänger sowie eine Befestigungsvorrichtung für den Hilfsantrieb.

Aufgrund geänderter Rahmenbedingungen, wie zum Beispiel neue Führerscheinregelungen, die Tendenz zu weniger stark motorisierten kraftstoffsparenden Zugfahrzeugen und Kraftstoffeinsparung im Zugbetrieb, bekommt auch für Anhänger der oben beschrieben Art der Leichtbau eine zunehmende Bedeutung. Dabei ist es naheliegend, dass auch eine Stützstruktur beziehungsweise das Fahrgestell des Anhängers gewichtsoptimiert ausgelegt wird. Ein Ansatz ist es dabei, die Längsträger beziehungsweise Längsholme nicht wie üblich im Wesentlichen parallel auszuführen sondern ungefähr V-förmig zueinander auszurichten und dabei jeweils geradlinig von der Zugeinrichtung bis zum Anhängerheck auszuführen. Zusätzlich kann durch eine Reduzierung der Materialstärken des Längsträgers sowie insbesondere durch Aussparungen im Bereich des Längsträgers, das Gewicht signifikant reduziert werden. Diese Maßnahmen erschweren aber zugleich den Anbau von Hilfsantrieben beziehungsweise Rangierhilfen in mehrfacher Hinsicht. Durch die geringere Materialstärke und gegebenenfalls durch die Aussparungen im Längsträger wird dieser derart "geschwächt", dass die Stützstruktur nicht mehr in der Lage ist, die beim Rangieren mit dem Hilfsantrieb auftretenden und in den Längsträger eingetragenen Kräfte aufzunehmen. Letztendlich führt dies zum Versagen (Verbiegen, Brechen) des Längsträgers. Des Weiteren ist durch die V-förmige Anordnung der Längsträger der Abstand des Längsträger zum einem Anhängerrad, also dem Ausgangspunkt der in den Längsträger eingetragenen Kräfte, deutlich größer als bei konventionellen Stützstrukturen/Chassis mit Parallelanordnung der Längsträger. Dies gilt im Besonderen bei einer Anordnung des Hilfsantriebs in Fahrtrichtung vor der Achse. Für den Längsträger wie auch für die Befestigungs- und Abstützvorrichtung des Hilfsantriebs bedeutet dies, dass dieser deutlich stärker (etwa auf Biegung) beansprucht wird, da er wesentlich weiter vom Befestigung-/Klemmpunkt am Längsträger auskragt. Die Befestigungs- und Abstützvorrichtung müsste folglich stärker/schwerer ausgeführt werden, um die auftretenden Kräfte aufnehmen zu können. Gleiches gilt für den Längsträger. Damit ergäbe sich aber eine erheblich geringere bzw. überhaupt keine Gewichtseinsparung des Gesamtsystems.

Es ist daher Aufgabe der vorliegenden Erfindung, eine gattungsgemäße Befestigungs- und Abstützvorrichtung, einen gattungsgemäßen Anhänger mit mindestens einem Hilfsantrieb sowie einen Stützrahmen eines Anhängers bereitzustellen, durch die einerseits eine sichere Befestigung des Hilfsantriebs an einem Stützrahmen des Anhängers und gleichzeitig eine verbesserte Krafteinleitung der beim Rangieren mit dem Hilfsantrieb auftretenden Kräfte in den Stützrahmen gewährleistet ist.

Zur Lösung dieser Aufgaben dienen eine Befestigungs- und Abstützvorrichtung mit den Merkmalen des Anspruchs 1, ein Anhänger mit den Merkmalen des Anspruchs 30 sowie ein Stützrahmen mit den Merkmalen des Anspruchs 35. Vorteilhafte Ausgestaltungen mit zweckmäßigen Weiterbildungen der Erfindung sind in den Unteransprüchen angegeben, wobei vorteilhafte Ausgestaltungen der Befestigungs- und Abstützvorrichtung als vorteilhafte Ausgestaltungen des erfindungsgemäßen Anhängers und umgekehrt anzusehen sind.

Die vorliegende Erfindung betrifft eine Befestigungs- und Abstützvorrichtung zur Befestigung und Abstützung eines Hilfsantriebs an mindestens einem Element eines Stützrahmens eines Anhängers, insbesondere einem Wohnwagen, einem Bootsanhänger, einem Verkaufswagen, einem Transportanhänger oder einem Autotransportanhänger. Dabei umfasst die Befestigungs- und Abstützvorrichtung mindestens ein erstes, an einem Achsrohrgehäuse angeordnetes erstes Abstützelement für einen Stoßdämpfer des Anhängers. Das Achsrohrgehäuse ist mittels einer ersten Befestigungsvorrichtung an einem Längsträger des Stützrahmens abgestützt und/oder befestigt ist. Damit ist eine sehr gute Krafteinleitung in den Stützrahmen gewährleistet. Zudem ist das erste Abstützelement mit einem zweiten Abstützelement verbunden, wobei das zweite Abstützelement zur Aufnahme und Abstützung eines Tragarms des Hilfsantriebs ausgebildet ist. Vorteilhafterweise erfolgt die Abstützung des Tragarms und damit des Hilfsantriebs über das mit dem zweiten Abstützelement verbundene erste Abstützelement, welches wiederum an dem Achsrohrgehäuse angeordnet ist. Über das relativ stabil ausgebildete Achsrohrgehäuse erfolgt eine sichere Ableitung der bei einem Rangieren mittels des Hilfsantriebs auftretenden Kräfte in den Stützrahmen beziehungsweise einen Längsträger des Stützrahmens. Dies gilt insbesondere auch für Stützrahmen beziehungsweise Längsträger mit geringeren Materialstärken, wie sie zum Beispiel im Leichtbau verwendet werden. Ein Verbiegen oder eine anders geartete Beschädigung des Längsträgers oder des Stützrahmens wird zuverlässig verhindert.

Unter "Stützrahmen des Anhängers" wird dabei das Fahrgestell oder Chassis des Anhängers verstanden.

In weiteren vorteilhaften Ausgestaltungen der erfindungsgemäßen Befestigungs- und Abstützvorrichtung umfasst das zweite Abstützelement eine Öffnung zur Aufnahme des Tragarms. Zudem besteht die Möglichkeit, dass der Tragarm mit dem zweiten Abstützelement direkt verbunden ist. Dabei kann der Tragarm beispielsweise mit dem zweiten Abstützelement mechanisch verbunden oder verschweißt sein.

In weiteren vorteilhaften Ausgestaltungen der erfindungsgemäßen Befestigungs- und Abstützvorrichtung umfasst das zweite Abstützelement einen Aufnahmestutzen zur Aufnahme und Abstützung des Tragarms des Hilfsantriebs. Das zweite Abstützelement kann aber auch eine Öffnung zur Aufnahme eines am Tragarm angeordneten Aufnahmestutzens umfassen. Dadurch ist eine sichere Abstützung des Tragarmes gewährleistet. Zudem besteht die Möglichkeit, dass das erste und zweite Abstützelement jeweils mindestens eine korrespondierende Öffnung zur Aufnahme eines Verbindungselementes zur gemeinsamen Fixierung des ersten und zweiten Abstützelementes sowie eines Endbereichs des Stoßdämpfers umfasst. Des Weiteren besteht die Möglichkeit, dass das erste und zweite Abstützelement jeweils mehrere korrespondierende Öffnungen zur Aufnahme jeweils eines Verbindungselementes zur gemeinsamen Fixierung des ersten und zweiten Abstützelementes sowie eines Endbereichs des Stoßdämpfers umfasst. Schließlich besteht die Möglichkeit, dass das erste Abstützelement eine Öffnung zur Aufnahme eines Verbindungselementes zur Befestigung eines Endbereichs des Stoßdämpfers an dem ersten Abstützelement sowie mindestens eine weitere Öffnung umfasst, wobei die weitere Öffnung mit einer entsprechenden, in dem zweiten Abstützelement ausgebildeten Öffnung zur Aufnahme eines Verbindungselements zur Fixierung des ersten an dem zweiten Abstützelement ausgebildet ist. Üblicherweise ist das Verbindungselement eine Schraubverbindung. Bei dem ersten und zweiten Abstützelement kann es sich jeweils um ein Abstützblech oder einen Abstützwinkel handeln. Es besteht natürlich auch die Möglichkeit, dass das erste und zweite Abstützelement miteinander verschweißt oder mittels einer Klemmvorrichtung miteinander verbunden werden. Auch andere Befestigungsmaßnahmen sind denkbar. Vorteilhafterweise kann sich die Art und insbesondere die Anzahl der Verbindungselemente nach den baulichen Gegebenheiten sowie der Ausgestaltung des Hilfsantriebes richten. Um Bauraum einzusparen, kann zum Beispiel die Verbindung beziehungsweise Abstützung des ersten und zweiten Abstützelementes gemeinsam mit dem Stoßdämpfer über ein einzelnes Verbindungselement erfolgen. Es besteht aber auch die Möglichkeit, dass zusätzliche Öffnungen, insbesondere Bohrungen in den ersten und zweiten Abstützelementen vorgesehen sind, die zum Beispiel eine Verschraubung des ersten und zweiten Abstützelementes mit oder ohne den Stoßdämpfer ermöglichen.

In weiteren vorteilhaften Ausgestaltungen der erfindungsgemäßen Befestigungs- und Abstützvorrichtung weist der Aufnahmestutzen einen geschlossenen oder offenen Querschnitt auf. Dabei kann die Querschnittsform des Aufnahmestutzens einer Querschnittsform des Tragarms entsprechen. Insbesondere ist auch vorgesehen, dass ein Innendurchmesser des Aufnahmestutzens einem Außendurchmesser des Tragarms des Hilfsantriebs entspricht oder geringfügig größer ist. Unter geringfügig größer wird eine Abweichung von bis zu 10 Prozent des Außendurchmessers des Tragarms verstanden. Insbesondere ist der Innendurchmesser des Aufnahmestutzens derart ausgebildet, dass der Tragarm einerseits in den Aufnahmestutzen ohne Probleme eingelegt oder durch ihn hindurchgeführt werden kann und andererseits ein fester Sitz des Tragarms in dem Aufnahmestutzen gewährleistet ist. Des Weiteren besteht die Möglichkeit, dass der Tragarm und/oder der Aufnahmestutzen mindestens ein Ausgleichs- oder Abstützelement zum Ausgleich eines zu großen Unterschieds zwischen dem Außendurchmesser des Tragarms und dem Innendurchmesser des Aufnahmestutzens aufweist.

Des Weiteren besteht die Möglichkeit, dass in dem Aufnahmestutzen und/oder einem an dem Aufnahmestutzen angeordneten Verstärkungselement mindestens eine Gewindebohrung zur Aufnahme einer Fixierschraube ausgebildet ist. Die Fixierschraube kann bis an die Oberfläche des Tragarms, welcher in dem Aufnahmestutzen angeordnet ist, bewegt werden, so dass es zu einer Lagefixierung des Tragarms im Aufnahmestutzen kommt.

In weiteren vorteilhaften Ausgestaltungen der erfindungsgemäßen Befestigungs- und Abstützvorrichtung besteht die Möglichkeit, dass der Tragarm des Hilfsantriebs mittels einer zweiten Befestigungsvorrichtung ebenfalls an dem Längsträger des Stützrahmens abgestützt und/oder befestigt ist. Durch diese zusätzliche Abstützung des Hilfsantriebs erfolgt die Krafteinleitung der beim Rangieren mittels des Hilfsantriebs auftretenden Kräfte nicht nur über das erste Abstützelement und das Achsrohrgehäuse sondern auch über eine Abstützung des Tragarms des Hilfsantriebs am Längsträger. Eine Beschädigung, insbesondere ein Verbiegen des Längsträgers wird hierdurch auch bei Längsträgern in Leichtbauweise zuverlässig verhindert.

Zudem besteht die weitere Möglichkeit, dass die zweite Befestigungsvorrichtung mindestens zwei miteinander verbindbare Halteelemente umfasst, wobei die Halteelemente derart ausgebildet sind, dass sie in montiertem Zustand mit jeweils einer Halteplatte zumindest teilweise an einem aufrecht verlaufenden Mittelsteg des Längsträgers beidseitig anliegen. Erfindungsgemäß weist eine der Halteplatten einen Führungsstutzen zur Aufnahme eines Tragarms des Hilfsantriebs und die andere Halteplatte eine korrespondierende Öffnung zur Aufnahme und den Durchtritt des Führungsstutzens auf. Dabei ist der Führungsstutzen derart an der Halteplatte angeordnet, dass er durch eine korrespondierende Öffnung im Mittelsteg des Längsträgers durchführbar ist. Eine derartige Ausgestaltung der zweiten Befestigungsvorrichtung ermöglicht es, dass einerseits die vorgegebenen strukturellen Eigenschaften des Längsträgers des Stützrahmens nicht nachteilig verändert werden. Die Öffnung für den Führungsstutzen im Mittelsteg des Längsträgers ist entweder bereits vorhanden oder kann ohne großen Aufwand und ohne nachteilige Veränderung der strukturellen Eigenschaften des Längsträgers ausgebildet werden. Durch die Anordnung und Ausgestaltung der zweite Befestigungsvorrichtung kommt der Hilfsantrieb im montierten Zustand im Bereich des Mittelstegs des Längsträgers zu liegen, sodass zudem die ursprüngliche Bodenfreiheit zwischen der Unterseite des Längsträgers und dem Untergrund nicht oder nur unwesentlich verringert wird.

Des Weiteren können die Halteelemente der zweiten Befestigungsvorrichtung jeweils quer von den Halteplatten abstehende untere Profilschenkel auf, die derart ausgebildet sind, dass sie in montiertem Zustand einen von dem Mittelsteg des Längsträgers quer abstehenden Untergurt umfassen. Des Weiteren besteht die Möglichkeit, dass die unteren Profilschenkel derart ausgebildet sind, dass sie in montiertem Zustand zumindest teilweise an dem Untergurt beidseitig anliegen. Zudem besteht die Möglichkeit, dass die unteren Profilschenkel in montiertem Zustand jeweils an einer vom Mittelsteg abgewandten Kante des Untergurts enden und/oder darüber hinausragen. Die unteren Profilschenkel können dabei form- oder kraftschlüssig miteinander verbindbar sein, sodass es zu einer sicheren Verbindung der Halteelemente der zweiten Befestigungsvorrichtung in montiertem Zustand kommt. Dabei besteht die Möglichkeit, dass die beiden unteren Profilschenkel mittels einer Klemmeinrichtung miteinander verbunden werden. Zudem besteht die Möglichkeit, dass diese über Verbindungsschrauben verbunden werden. Auch andere Befestigungs- und Verbindungsmöglichkeiten, wie zum Beispiel ein Verkleben und Verschweißen, insbesondere der beiden unteren Profilschenkel sind denkbar. Zudem besteht die Möglichkeit, dass mindestens eine Halteplatte der Halteelemente weitere Öffnungen aufweist, die mit entsprechenden Öffnungen im Mittelsteg des Längsträgers korrespondieren. Durch diese Öffnungen können dann die Halteelemente miteinander und/oder mit dem Mittelsteg des Längsträgers verbunden, insbesondere verschraubt werden. Des Weiteren besteht natürlich die Möglichkeit, dass die Halteplatten der Halteelemente jeweils mit der Innen- beziehungsweise Außenseite des Mittelstegs verschweißt werden.

Für den Fall, dass die unteren Profilschenkel in montiertem Zustand jeweils über die vom Mittelsteg abgewandte Kante des Untergurts hinausragen, können wiederum durch entsprechende korrespondierende Öffnungen Schraubverbindungen angebracht werden. Auch eine Klemmung, ein Verschweißen oder Verkleben der überstehenden Bereiche der unteren Profilschenkel ist denkbar. Insbesondere besteht die Möglichkeit, dass die unteren Profilschenkel mindestens einer Schraub- und/oder Klemmverbindung lösbar miteinander verbindbar sind. Vorteilhafterweise kann hierbei die Verbindung zwischen den unteren Profilschenkeln wieder gelöst werden. Dies ist insbesondere bei Reparaturen oder Wartungsarbeiten, die den Hilfsantrieb betreffen, notwendig und von Vorteil. Des Weiteren können die unteren Profilschenkel derart ausgebildet sind, dass sie in montiertem Zustand zumindest teilweise an dem Untergurt beidseitig anliegen.

In weiteren vorteilhaften Ausgestaltungen der zweiten Befestigungsvorrichtung weist der Führungsstutzen einen geschlossenen oder offenen Querschnitt auf. Die Querschnittsform des Führungsstutzens kann dabei der Querschnittsform des Tragarms des Hilfsantriebs entsprechen. Dabei kann der Querschnitt der Führungsstutzens quadratisch, rechteckig, rund, U-förmig oder halbkreisförmig ausgebildet sein. Auch andere Querschnittsformen sind denkbar und richten sich insbesondere nach der Querschnittsform des aufzunehmenden Tragarms des Hilfsantriebs. Dabei kann ein Innendurchmesser des Führungsstutzens einem Außendurchmesser des Tragarms des Hilfsantriebs entsprechen oder geringfügig größer sein. Unter geringfügig größer wird eine Abweichung von bis zu 10 % des Außendurchmessers des Tragarms verstanden. Insbesondere ist der Innendurchmesser des Führungsstutzens derart ausgebildet, dass der Tragarm einerseits in den Führungsstutzen ohne Probleme eingelegt oder durch ihn hindurchgeführt geführt werden kann und andererseits ein fester Sitz des Tragarms in dem Führungsstutzen gewährleistet ist. Dabei kann auch die Form der Öffnung in der Halteplatte des gegenüberliegenden Halteelements der Querschnittsform des Führungsstutzens entsprechen. Des Weiteren besteht die Möglichkeit, dass der Tragarm und/oder der Führungsstutzen mindestens ein Ausgleichs- oder Abstützelement zum Ausgleich eines zu großen Unterschieds zwischen dem Außendurchmesser des Tragarms und dem Innendurchmesser des Führungsstutzens aufweist.

In weiteren vorteilhaften Ausgestaltungen der zweiten Befestigungsvorrichtung ist an dem Führungsstutzen mindestens eine Stützstrebe angeordnet, wobei ein dem Führungsstutzen gegenüberliegendes Ende der Stützstrebe an dem unteren Profilschenkel des Halteelements abgestützt ist. Die Anordnung der Stützstrebe führt zu einer Versteifung des Halteelements und ermöglicht eine erhöhte Aufnahme von Kräften, ohne dass es zu einer Verwindung des Halteelements oder der zweiten Befestigungsvorrichtung insgesamt kommt. Die Stützstrebe kann an dem Führungsstutzen und dem unteren Profilschenkel angeschweißt sein. Des Weiteren besteht die Möglichkeit, dass in dem Führungsstutzen und/oder an einem an dem Führungsstutzen angeordneten Verstärkungselement mindestens eine Gewindebohrung zur Aufnahme einer Fixierschraube ausgebildet ist. Die Fixierschraube kann bis an die Oberfläche des Tragarms, welcher in dem Führungsstutzen angeordnet ist, bewegt werden, sodass es zu einer Lagefixierung des Tragarms im Führungsstutzen kommt.

In weiteren vorteilhaften Ausgestaltungen der zweiten Befestigungsvorrichtung ist das erste Halteelement im Querschnitt ungefähr L- oder U-förmig ausgebildet. Das zweite Halteelement kann im Querschnitt L- oder S-förmig ausgebildet sein. Das erste Halteelement dient dabei insbesondere zur Anlage an einer Innenseite des Längsträgers des Stützrahmens des Anhängers. Unter Innenseite wird dabei eine von einem Anhängerrad abgewandte Seite des Längsträgers verstanden. Das zweite Halteelement ist insbesondere zur Anlage an der Außenseite, das heißt der dem Anhängerrad zugewandten Seite des Längsträgers ausgebildet. Je nach Anforderungen an die strukturellen Vorgaben des Längsträgers besteht vorteilhafterweise die Möglichkeit die Halteelemente unterschiedlich auszubilden. Zur Ausbildung von U- oder S-Formen weisen die Halteelemente zusätzliche obere Profilschenkel auf, die quer zu den Halteplatten ausgebildet sind. Auch weitere Querschnittsformen sind denkbar und richten sich insbesondere nach den vorgegebenen strukturellen Ausgestaltungen des Längsträgers.

In weiteren vorteilhaften Ausgestaltungen der zweiten Befestigungsvorrichtung weisen die Halteplatte des ersten Halteelements und/oder die Halteplatte des zweiten Halteelements weitere Öffnungen zur Aufnahme von Verbindungselementen oder für den Durchtritt von Elementen des Anhängers oder der Montagevorrichtung auf. Dabei kann die Anordnung dieser Öffnungen in montiertem Zustand der zweiten Befestigungsvorrichtung zumindest teilweise einem Lochbild von in dem Mittelsteg des Längsträgers ausgebildeten Öffnungen entsprechen. Dadurch besteht die Möglichkeit, Verbindungselemente, wie zum Beispiel Verbindungsschrauben über bereits vorhandene Öffnungen im Mittelsteg und entsprechende Öffnungen in den Halteelementen hindurchzuführen und die beiden Halteelemente miteinander zu verbinden. Dies kann dabei ohne Veränderungen der vorgegebenen strukturellen Eigenschaften des Längsträgers erfolgen.

Des Weiteren besteht die Möglichkeit, dass die zweite Befestigungsvorrichtung mindestens eine Klemmvorrichtung zu deren Befestigung an dem Längsträger des Stützrahmens umfasst.

Die Erfindung betrifft weiterhin einen Anhänger, insbesondere Wohnwagen, Bootsanhänger, Verkaufswagen, Transportanhänger oder Autotransportanhänger, umfassend mindestens eine Befestigungs- und Abstützvorrichtung wie im Vorhergehenden beschrieben. Die unterschiedlichen Ausführungsformen und deren Vorteile ergeben sich aus den vorhergehenden Ausführungen zu den erfindungsgemäßen Ausgestaltungen der Befestigungs- und Abstützvorrichtung.

In vorteilhaften Ausgestaltungen des erfindungsgemäßen Anhängers umfasst der Stützrahmen des Anhängers mindestens zwei parallel zueinander verlaufende Längsträger. Es ist aber auch möglich, dass der Stützrahmen zwei V-förmig zueinander angeordnete Längsträger umfasst. Vorteilhafterweise ist die Befestigungs- und Abstützvorrichtung derart ausgebildet, dass sie an einer Vielzahl von Längsträgertypen angeordnet und damit verwendet werden kann. Der Stützrahmen kann zum Beispiel zumindest teilweise aus einem Leichtmetall, einem faserverstärktem Kunststoff oder einer Kombination aus diesen Materialien bestehen. Zudem kann die die Befestigungs- und Abstützvorrichtung derart zwischen dem Längsträger und einem Anhängerrad angeordnet sein, dass ein Antriebselement des Hilfsantriebs in einem Bereich einer Lauffläche des Anhängerrads positioniert ist.

Die Erfindung betrifft weiterhin einen Stützrahmen eines Anhängers, insbesondere eines Wohnwagens, eines Bootsanhängers, eines Verkaufswagens, eines Transportanhängers oder eines Autotransportanhängers, umfassend mindestens eine Befestigungs- und Abstützvorrichtung wie im Vorhergehenden beschrieben. Die unterschiedlichen Ausführungsformen und deren Vorteile ergeben sich aus den vorhergehenden Ausführungen zu den erfindungsgemäßen Ausgestaltungen der Befestigungs- und Abstützvorrichtung.

Weitere Vorteile, Merkmale und Einzelheiten der Erfindung ergeben sich aus der nachfolgenden Beschreibung mehrerer Ausführungsbeispiele sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen, oder in Alleinstellung verwendbar, ohne den Rahmen der Erfindung zu verlassen.

Es zeigen
- Figur 1: eine schematische Darstellung einer erfindungsgemäßen Befestigungs- und Abstützvorrichtung für einen Hilfsantrieb in montiertem Zustand;
- Figur 2: eine schematische Darstellung der erfindungsgemäßen Befestigungs- und Abstützvorrichtung gemäß Figur 1 aus einem anderen Blickwinkel;
- Figur 3: eine schematische Darstellung der erfindungsgemäßen Befestigungs- und Abstützvorrichtung gemäß Figur 1 in einer Ansicht von unten;
- Figur 4: eine schematische Darstellung einer erfindungsgemäßen Befestigungs- und Abstützvorrichtung für einen Hilfsantrieb gemäß einer zweiten Ausführungsform in montiertem Zustand;
- Figur 5: eine schematische Darstellung einer erfindungsgemäßen Befestigungs- und Abstützvorrichtung für einen Hilfsantrieb gemäß einer dritten Ausführungsform in montiertem Zustand;
- Figur 6: eine schematische Darstellung einer erfindungsgemäßen Befestigungs- und Abstützvorrichtung für einen Hilfsantrieb gemäß einer vierten Ausführungsform in montiertem Zustand; und
- Figur 7: eine schematische Darstellung der erfindungsgemäßen Befestigungs- und Abstützvorrichtung gemäß Figur 6 aus einem anderen Blickwinkel.

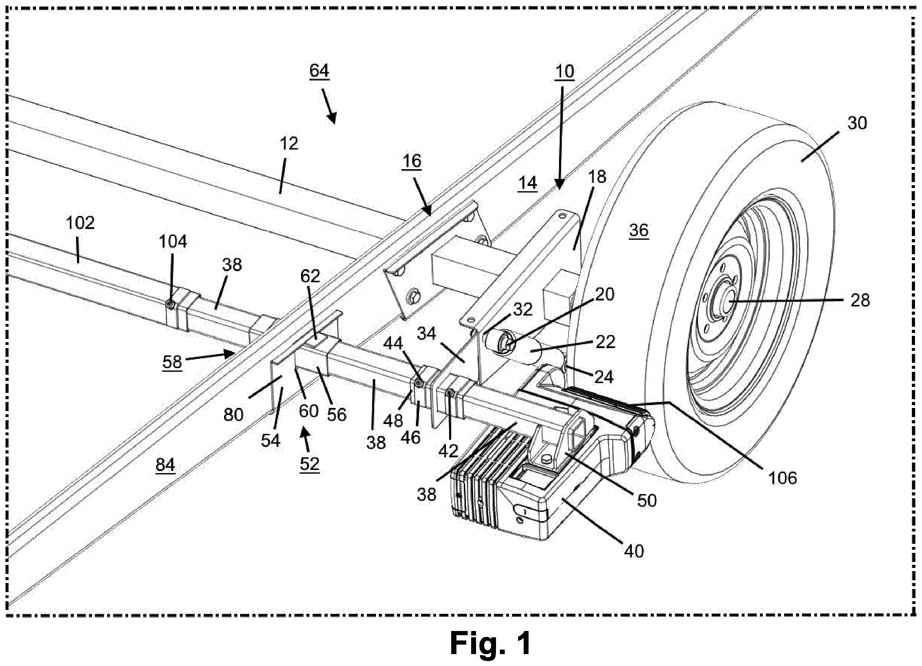

Die Figur 1 zeigt eine schematische Darstellung einer Befestigungs- und Abstützvorrichtung 10 für einen Hilfsantrieb 40 in montiertem Zustand. Bei dem Hilfsantrieb 40 handelt es sich um einen zusätzlichen Antrieb für einen Anhänger, insbesondere einen Wohnwagen. Unter Anhänger werden auch beispielsweise Bootsanhänger, Verkaufswagen, Transportanhänger oder Autotransportanhänger oder ähnliche Anhänger verstanden. Der Hilfsantrieb 40 umfasst dabei an ein walzenartiges Antriebselement 106, welches zum Eingriff mit einer Lauffläche 108 eines Anhängerrades 30 ausgebildet ist. Das Antriebselement 106 ist dabei in einer Gehäusehalterung eines Gehäuses des Hilfsantriebs 40 drehbar gelagert. In Fig. 1 ist der Hilfsantrieb 40 in einem nicht-zugeschwenkten Zustand dargestellt. Dies bedeutet, dass das Antriebselement 106 nicht in Eingriff mit dem Anhängerrad 30 beziehungsweise dessen Lauffläche 36 steht. Um eine Bewegung des Anhängerrads 30 zu ermöglichen, muss das Antriebselement 106 in Eingriff mit der Lauffläche 36 gebracht werden. Durch eine Drehung des Antriebselements 106 wird dann das Anhängerrad 30 bewegt. Der Hilfsantrieb 40 umfasst zudem elektronische und elektrische Komponenten, wie zum Beispiel den Motor für das Antriebselement 106 sowie Anschwenkmotoren und -führungen zur Betätigung einer Zustellvorrichtung für das Antriebselement 106 sowie eine Steuerelektronik (nicht dargestellt). Die zuletzt genannten Komponenten sind innerhalb des Gehäuses des Hilfsantriebs 40 angeordnet. Das An- und Abschwenken des Antriebselements 106 erfolgt durch ein entsprechendes Verschieben von zumindest Teilelementen des Hilfsantriebs 40 relativ zu einem Stützrahmen 64 des Anhängers.

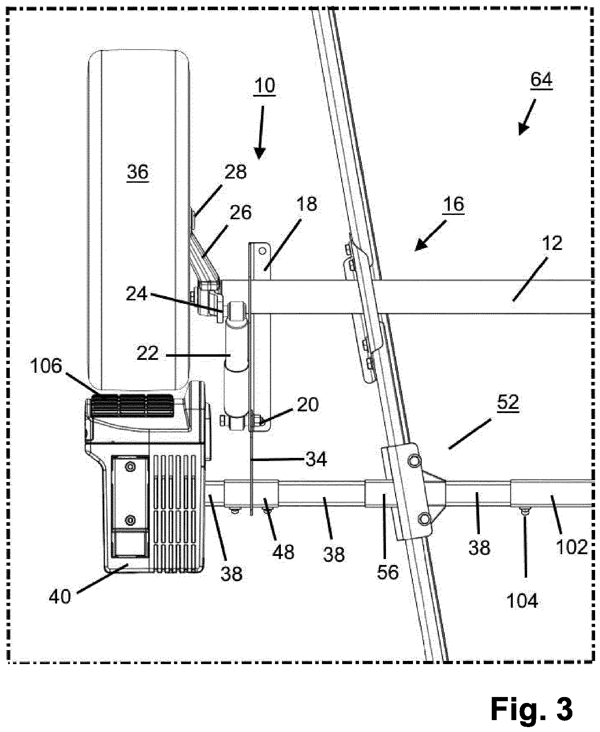

Des Weiteren erkennt man, dass der Hilfsantrieb 40 über eine Verbindungsvorrichtung 50 mit einem Tragarm 38 verbunden ist. Aus Fig. 1 wird zudem deutlich, dass der Hilfsantrieb 40 von einer Außenseite eines Längsträgers 14 des Stützrahmens 64 beabstandet angeordnet ist. Unter ""Außenseite des Längsträgers" wird die dem Anhängerrad 30 zugewandte Seite des Längsträgers 14 verstanden. Die Abstützung und Befestigung des Hilfsantriebs 40 erfolgt über die Befestigungs- und Abstützvorrichtung 10. Man erkennt, dass die Befestigungs- und Abstützvorrichtung 10 ein erstes, an einem Achsrohrgehäuse 12 angeordnetes erstes Abstützelement 18 für einen Stoßdämpfer 22 des Anhängers aufweist. Der Stoßdämpfer 22 ist dabei mittels einer Stoßdämpferschraube 20, die durch eine Öffnung 32 in dem ersten Abstützelement 18 geführt ist, an dem ersten Abstützelement 18 befestigt. An dem dieser Befestigung gegenüberliegenden Ende ist der Stoßdämpfer 22 über eine weitere Stoßdämpferschraube 24 mit einem Radtragarm 26 verbunden. Der Radtragarm 26 ist wiederum mit einer Radnabe 28 des Anhängerrades 30 verbunden (vergleiche auch Fig. 3).

In dem dargestellten Ausführungsbeispiel ist das erste Abstützelement 18 mit dem Achsrohrgehäuse 12 verschweißt. Auch andere Befestigungsmöglichkeiten sind denkbar. Über eine erste Befestigungsvorrichtung 16 ist das Achsrohrgehäuse 12 wiederum an dem Längsträger 14 des Stützrahmens 64 des Anhängers befestigt. In dem dargestellten Ausführungsbeispiel ist das erste Befestigungselement 16 über mehrere Schraubverbindungen mit einem Mittelsteg 84 des Längsträgers 14 verschraubt. Auch andere Befestigungsarten, wie zum Beispiel Klemmverbindungen, sind denkbar.

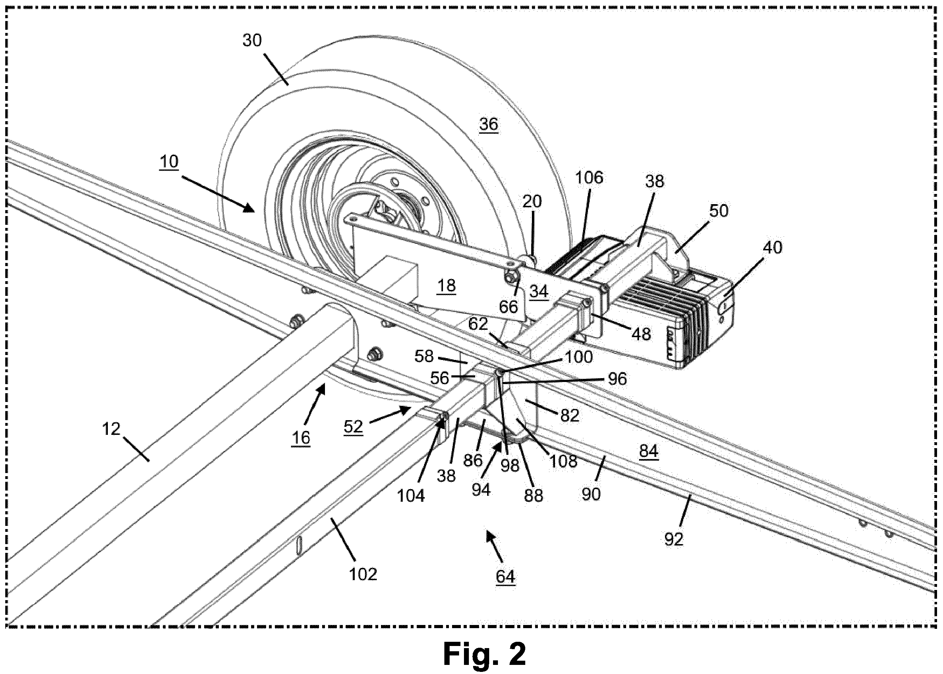

Des Weiteren erkennt man, dass das erste Abstützelement 18 mit einem zweiten Abstützelement 34 verbunden ist, wobei das zweite Abstützelement 34 zur Aufnahme und Abstützung des Tragarms 38 des Hilfsantriebs 40 ausgebildet ist. In dem dargestellten ersten Ausführungsbeispiel der Befestigungs- und Abstützvorrichtung 10 weist das zweite Abstützelement 34 eine zur Öffnung 32 in dem ersten Abstützelement 18 korrespondierende Öffnung 66 auf (vergleiche auch Fig. 2), durch die die Stoßdämpferschraube 20 geführt und fixiert werden kann, so dass es zu einer Befestigung des zweiten Abstützelementes 34 an dem ersten Abstützelement 18 sowie einer Fixierung eines Endbereichs des Stoßdämpfers 22 kommt. In dem dargestellten Ausführungsbeispiel ist das erste Abstützelement als Abstützwinkel, das zweite Abstützelement 40 als Abstützblech ausgebildet. An dem zweiten Abstützelement 34 ist zudem ein Aufnahmestutzen 48 zur Aufnahme und Abstützung des Tragarms 38 ausgebildet. Man erkennt, dass der Aufnahmestutzen 48 einen geschlossenen Querschnitt aufweist, wobei die Querschnittsform des Aufnahmestutzens 48 einer Querschnittsform des Tragarms 38 entspricht. In dem dargestellten Ausführungsbeispiel weist der Tragarm 38 und damit auch der Aufnahmestutzen 48 eine ungefähr quadratische Querschnittsform auf, wobei die jeweiligen Ecken des Quadrates abgewinkelt sind, so dass insgesamt eine achteckige Querschnittsform entsteht. Des Weiteren erkennt man, dass der Innendurchmesser des Aufnahmestutzens 48 ungefähr einem Außendurchmesser des Tragarms 38 des Hilfsantriebs 40 entspricht. In dem dargestellten Ausführungsbeispiel ist der Aufnahmestutzen 48 mit dem zweiten Abstützelement 34 verschweißt. Auch andere Befestigungsarten sind denkbar. Des Weiteren erkennt man, dass an der Außenseite des Aufnahmestutzens 48 jeweils an den dem zweiten Abstützelement 34 gegenüberliegenden Seiten Verstärkungselemente 46 angebracht sind. Durch die Verstärkungselemente 46 ist jeweils eine Gewindebohrung 44 geführt, in die Fixierschrauben 42 zur Lagefixierung des Tragarms 38 in dem Aufnahmestutzen 48 beziehungsweise dem zweiten Abstützelement 34 ausgebildet. Auch andere Befestigungsarten des Tragarms 38 innerhalb oder an dem Aufnahmestutzen 48 sind denkbar.

Aus Fig. 1 wird zudem deutlich, dass der Tragarm 38 des Hilfsantriebs 40 weiterhin mittels einer zweiten Befestigungsvorrichtung 52 an dem Längsträger 14 des Stützrahmens 64 abgestützt und befestigt ist. In Zusammenschau mit der Fig. 2, die eine schematische Darstellung der Befestigungs- und Abstützvorrichtung gemäß Fig. 1 aus einem anderen Blickwinkel zeigt, erkennt man, dass die zweite Befestigungsvorrichtung 52 zwei miteinander verbindbare Halteelemente 54, 58 umfasst. Ein erstes Halteelement 58 ist dabei in montiertem Zustand an einer Innenseite des Längsträgers 14 angeordnet (vergleiche Fig. 2). Das zweite Halteelement 54 ist dagegen an einer Außenseite, das heißt einer dem Anhängerrad 30 zugewandten Seite des Längsträgers 14 angeordnet. Man erkennt, dass die Halteelemente 54, 58 insgesamt derart ausgebildet sind, dass sie in montiertem Zustand mit jeweils einer Halteplatte 82, 80 zumindest teilweise an dem aufrecht verlaufenden Mittelsteg 84 des Längsträgers 14 beidseitig anliegen. Des Weiteren erkennt man, dass die Halteplatte 82 des ersten Halteelementes 58 einen Führungsstutzen 56 zur Aufnahme des Tragarms 38 des Hilfsantriebs 40 aufweist. Die andere Halteplatte 80 des zweiten Halteelementes 54 weist dagegen eine korrespondierende Öffnung 60 zur Aufnahme und den Durchtritt des Führungsstutzens 56 auf. Dabei ist der Führungsstutzen 56 derart an der Halteplatte 82 angeordnet, dass er durch eine wiederum korrespondierende Öffnung im Mittelsteg 84 des Längsträgers 14 durchführbar ist. Durch die Verbindung der beiden Halteelemente 54, 58 ergibt sich eine sichere zusätzliche Befestigung des Tragarms 38 und damit des Hilfsantriebs 40 an dem Längsträger 14 des Stützrahmens 64.

Des Weiteren wird deutlich, dass die Halteelemente 54, 58 jeweils quer von den Halteplatten 80, 82 abstehende untere Profilschenkel 86, 88 aufweisen. Die unteren Profilschenkel 86, 88 sind dabei derart ausgebildet, dass sie in montiertem Zustand einen von dem Mittelsteg 84 des Längsträgers 14 quer abstehenden Untergurt 90 umfassen (vergleiche Fig. 2). Der Untergurt 90 ragt dabei von der Innenseite des Längsträgers 14 quer in eine von dem Anhängerrad 30 abgewandte Richtung. Aus Fig. 2 wird zudem deutlich, dass die unteren Profilschenkel 86, 88 in montiertem Zustand jeweils über eine vom Mittelsteg 84 abgewandte Kante 92 des Untergurts 90 hinausragen. In den über die Kante 92 hinausreichenden Bereichen weisen die unteren Profilschenkel 86, 88 korrespondierende, miteinander fluchtende Öffnungen zur Aufnahme von Schraubverbindungen 94 auf. Über die Schraubverbindungen 94 sind die Halteelemente 54, 58 miteinander verbunden und zudem an dem Längsträger 14 befestigt. Anstelle der Schraubverbindungen 94 können hierbei auch beispielsweise Klemmvorrichtungen verwendet werden.

In der Zusammenschau der Figuren 1 und 2 wird zudem deutlich, dass das erste Halteelement 58 im Querschnitt U-förmig ausgebildet ist. Neben dem unteren Profilschenkel 86 weist das erste Halteelement 58 zudem einen dem unteren Profilschenkel 86 gegenüberliegenden oberen Profilschenkel auf, der ebenfalls quer zum Mittelsteg 84 ausgebildet ist. Das zweite Halteelement 54 weist dagegen einen S-förmigen Querschnitt auf. Hierbei ist an dem dem unteren Profilschenkel 88 gegenüberliegenden Ende ein quer von der Halteplatte 80 abstehender oberer Profilschenkel ausgebildet. Der obere Profilschenkel weist dabei in Richtung des Anhängerrades 30.

Aus Fig. 2 wird zudem deutlich, dass an dem Führungsstutzen 56 zwei Stützstreben 108 angeordnet sind, wobei die dem Führungsstutzen 56 gegenüberliegenden Enden der Stützstreben 108 an dem unteren Profilschenkel 86 abgestützt und befestigt sind.

Zudem ist an dem Führungsstutzen 56 ein Verstärkungselement 96 angeordnet, wobei durch das Verstärkungselement 96 und den Führungsstutzen eine Gewindebohrung 98 zur Aufnahme einer Fixierschraube 100 ausgebildet ist. Mittels der Fixierschraube 100 ist der Tragarm 38 innerhalb des Führungsstutzens 56 lagefixierbar. Des Weiteren ist aus Fig. 1 erkennbar, dass die Form der Öffnung 60 in der Halteplatte 80 des zweiten Halteelementes 54 der Querschnittsform des Führungsstutzens 56 entspricht. Zudem entspricht ein Innendurchmesser des Führungsstutzens 56 wiederum einem Außendurchmesser des Tragarms 38 oder ist geringfügig größer. Entscheidend ist dabei, dass der Tragarm 38 sicher in dem Führungsstutzen 56 geführt beziehungsweise gelagert ist. Des Weiteren ist erkennbar, dass an der Außenseite des Führungsstutzens 56 ein Verrastelement 62 angeordnet ist. Durch das Verrastelement 62 wird ein sicherer Rückhalt des zweiten Halteelementes 54 an dem Führungsstutzen 56 gewährleistet.

Des Weiteren erkennt man, dass der Längsträger 14 ebenfalls U-förmig ausgebildet ist. Dieser weist hierzu einen dem Untergurt 90 gegenüberliegenden Obergurt auf, der ebenfalls quer zum Mittelsteg 84 ausgebildet ist.

Aus Fig. 2 wird zudem deutlich, dass das erste Abstützelement 18 mit dem zweiten Abstützelement 34 über die gemeinsame Schraubverbindung 20, die zudem den Stoßdämpfer 22 an dem ersten Abstützelement 18 befestigt, verbunden sind. Die mit der entsprechenden Öffnung 32 des ersten Abstützelementes korrespondierende und fluchtende Öffnung 66 in dem zweiten Abstützelement 34 ist dabei in einem von einem Hauptkörper des zweiten Abstützelementes 34 abragenden Bereich angeordnet.

In den Figuren 1 und 2 sowie den folgenden Figuren ist jeweils nur ein Längsträger 14 des Stützrahmens 64 dargestellt. Die Ausgestaltung der Befestigungs- und Abstützvorrichtung 10 sowie beispielsweise der ersten und zweiten Befestigungsvorrichtung 16, 52 sowie die Befestigung und Abstützung des Hilfsantriebs 40 kann an einem zweiten, parallel zum Längsträger 14 ausgebildeten zweiten Längsträger (nicht dargestellt) identisch oder nahezu identisch ausgeführt werden. Entsprechendes gilt, wenn die Längsträger 14, wie in den Ausführungsbeispielen dargestellt, nicht parallel, sondern V-förmig aufeinander zulaufend ausgebildet sind. An den gegenüberliegenden Enden des Tragarms 38 beziehungsweise einer die Tragarme 38 verbindenden Querstrebe 102 kann dabei jeweils mindestens ein Hilfsantrieb 40 angeordnet sein. In den dargestellten Ausführungsbeispielen ist der Tragarm 38 aus mehreren Elementen, nämlich den Tragarmen 38 und der zwei gegenüberliegende Tragarme verbindende Querstrebe 102 zusammengesetzt. Die Querstrebe 102 ist jeweils über eine lösbare Verbindungsvorrichtung 104 mit einem Tragarm 38 lösbar verbunden. Bei dieser Ausgestaltung des Tragarms 38 aus mehreren Elementen kann dieser insgesamt teleskopierbar ausgebildet sein. Zudem besteht die Möglichkeit, dass die Querschnittsform des Tragarms 38 insgesamt geschlossen (siehe Ausführungsbeispiele) oder offen ausgestaltet ist (nicht dargestellt). Entsprechendes gilt für die Querstrebe 102.

Fig. 3 zeigt eine schematische Darstellung der Befestigungs- und Abstützvorrichtung 10 gemäß Fig. 1 in einer Ansicht von unten. Man erkennt insbesondere die Anordnung der Befestigungs- und Abstützvorrichtung 10 zwischen dem Anhängerrad 30 und dem Längsträger 14 des Stützrahmens 64. Zudem wird die Befestigung des Stoßdämpfers 22 einerseits über die Stoßdämpferschraube 20 an dem ersten Abstützelement 18 und andererseits an dem zweiten Abstützelement 34 deutlich. An dem der Stoßdämpferschraube 20 gegenüberliegenden Ende des Stoßdämpfers 22 ist der Stoßdämpfer 22 über die weitere Stoßdämpferschraube 24 mit der Achsschwinge 26 verbunden. Des Weiteren erkennt man, dass der Tragarm 38 des Hilfsantriebs 40 einerseits in dem Aufnahmestutzen 48 und zudem in dem Führungsstutzen 56 angeordnet ist. Das erste Abstützelement 18 ist mit dem Achsrohr 12 verbunden, wobei das Achsrohr 12 wiederum an dem Längsträger 14 über die erste Befestigungsvorrichtung 16 befestigt und abgestützt ist. Der Tragarm 38 ist zudem über die zweite Befestigungsvorrichtung 52 ebenfalls am Längsträger 14 befestigt und abgestützt.

Des Weiteren ist aus Fig. 3 deutlich erkennbar, dass der Längsträger 14 schräg zu den Längsachsen des Achsrohrs 12 und der Querstrebe 102 verläuft. Mit einem nicht dargestellten zweiten Längsträger bildet der Längsträger 14 eine V-Form aus. Aufgrund dieser Anordnung des Längsträgers 14 ist der Abstand zwischen der ersten Befestigungsvorrichtung 16 und dem ersten Abstützelement 18 kleiner als der Abstand zwischen der zweiten Befestigungsvorrichtung 52 und dem zweiten Abstützelement 34. Durch die Abstützung des Hilfsantriebs 40 einerseits über die Befestigungs- und Abstützvorrichtung 10 und andererseits über die zweite Befestigungsvorrichtung 52 können unterschiedliche, während des Rangierbetriebs mittels des Hilfsantriebs 40 auftretende Kräfte sicher in den Stützrahmen 64 und insbesondere in den Längsträger 14 eingeleitet werden.

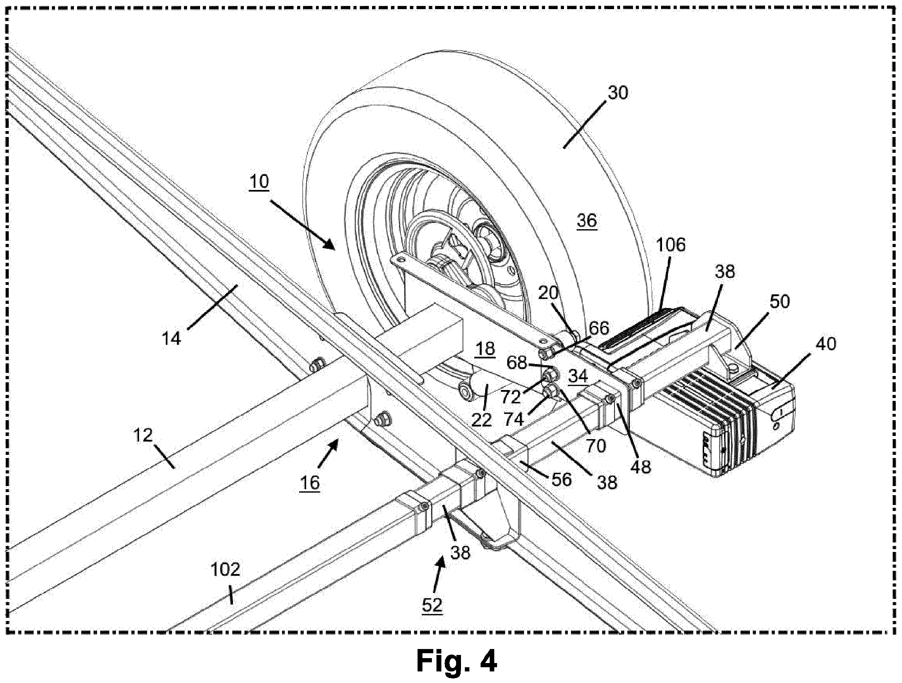

Fig. 4 zeigt eine schematische Darstellung einer Befestigungs- und Abstützvorrichtung 10 für einen Hilfsantrieb 40 gemäß einer zweiten Ausführungsform in einem montierten Zustand. In dem dargestellten zweiten Ausführungsbeispiel sind die im ersten Ausführungsbeispiel beschriebenen identischen Merkmale mit gleichen Bezugszeichen gekennzeichnet. Im Gegensatz zu der Befestigungs- und Abstützvorrichtung gemäß dem ersten Ausführungsbeispiel zeigt die in Fig. 4 dargestellte Befestigungs- und Abstützvorrichtung 10 ein erstes Abstützelement 18 mit insgesamt drei Öffnungen, die mit entsprechenden Öffnungen 66, 68, 70 in dem zweiten Abstützelement 34 korrespondieren und damit fluchtend ausgebildet sind. Man erkennt, dass wiederum über die Stoßdämpferschraube 20 sowohl der Stoßdämpfer 22 wie auch das erste Abstützelement 18 mit dem zweiten Abstützelement 34 miteinander verbunden sind. Zusätzlich ist das erste Abstützelement 18 mit dem zweiten Abstützelement 34 über weitere Schraubverbindungen 72, 74, welche durch die entsprechenden zusätzlichen Öffnungen geführt sind, verbunden. Die übrigen Elemente der dargestellten Befestigungs- und Abstützvorrichtung 10, wie zum Beispiel der Aufnahmestutzen 48 sowie die erste und zweite Befestigungsvorrichtung 16, 52 entsprechend dem in den Figuren 1 bis 3 dargestellten ersten Ausführungsbeispiel.

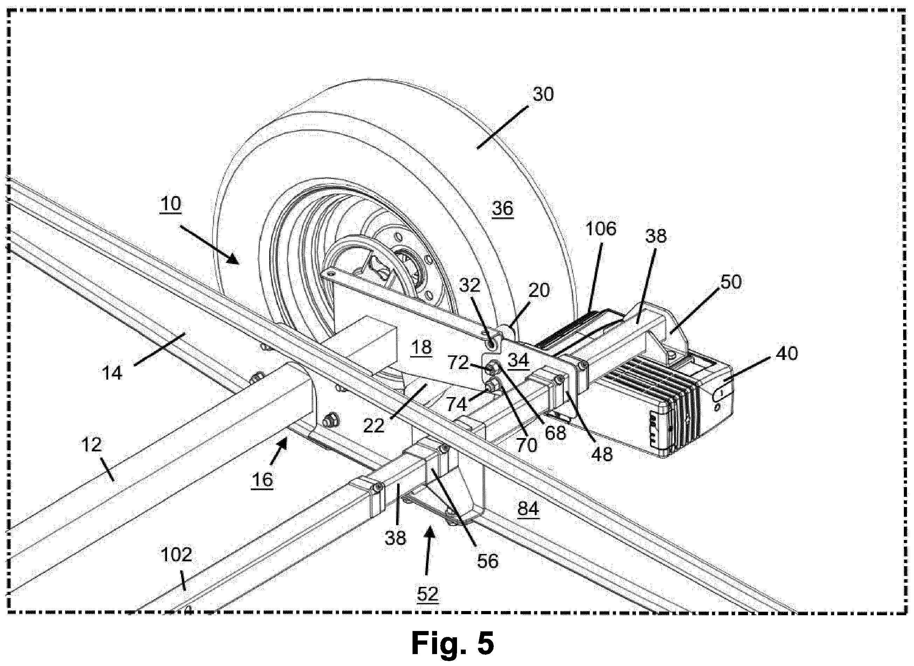

Entsprechendes gilt für die in Fig. 5 gezeigte schematische Darstellung einer Befestigungs- und Abstützvorrichtung 10 für einen Hilfsantrieb 40 gemäß einer dritten Ausführungsform. Auch hier wird die Befestigungs- und Abstützvorrichtung 10 im montierten Zustand dargestellt. Im Gegensatz zu den Befestigungs- und Abstützvorrichtungen gemäß dem ersten und zweiten Ausführungsbeispiel weist hier das zweite Abstützelement 34 lediglich zwei Öffnungen 68, 70 auf, die mit entsprechenden Öffnungen in dem ersten Abstützelement 18 fluchten und zur Aufnahme der Schraubverbindungen 72, 74 dienen. Dies bedeutet, dass in dem dargestellten Ausführungsbeispiel das erste Abstützelement 18 mittels der beiden Schraubverbindungen 72, 74 mit dem zweiten Abstützelement 34 verbunden ist. Die weitere Öffnung 32 in dem ersten Abstützelement 18 dient zur Aufnahme der Stoßdämpferschraube 20 und damit zur Befestigung des entsprechenden Endbereichs des Stoßdämpfers 22 an dem ersten Abstützelement 18. Die weiteren Elemente des hier gezeigten Ausführungsbeispiels der Befestigungs- und Abstützvorrichtung 10 sowie weitere Merkmale des Systems insgesamt entsprechen den in den Figuren 1 bis 4 dargestellten Ausführungsbeispielen und beschriebenen Merkmalen.

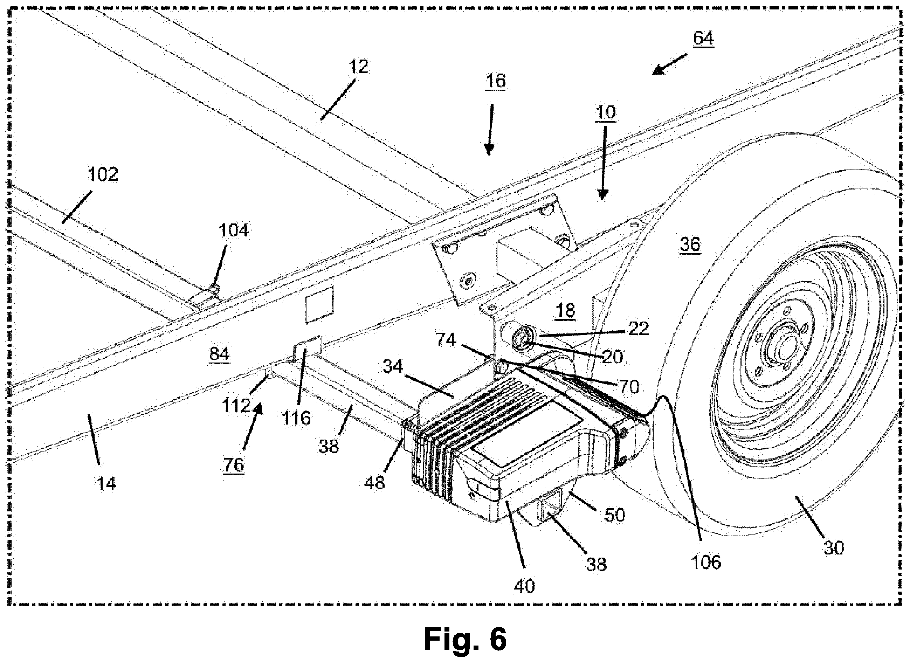

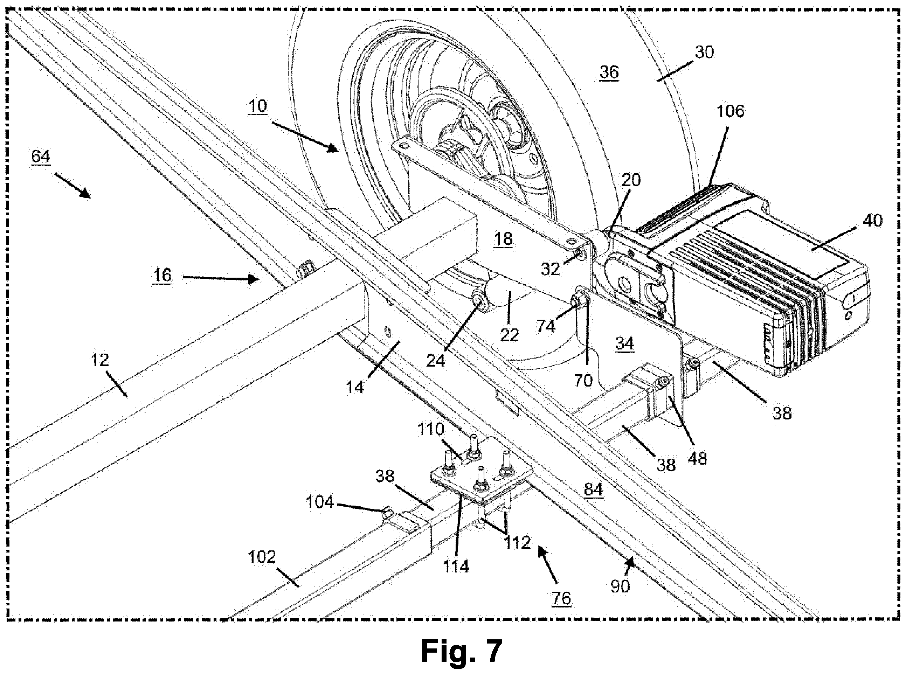

In den Figuren 6 und 7 ist eine vierte Ausführungsform der Befestigungs- und Abstützvorrichtung 10 für einen Hilfsantrieb 40 schematisch dargestellt. In der Zusammenschau der Figuren 6 und 7 erkennt man, dass der Tragarm 38 über das Verbindungselement 50 an einer Unterseite des Hilfsantriebs 40 befestigt ist. Unter Unterseite des Hilfsantriebs 40 wird hierbei die dem Boden zugewandte Seite des Hilfsantriebs 40 verstanden. Man erkennt, dass diese "Untenbefestigung" des Tragarms 38 unterschiedlich zu der "Obenbefestigung" des Tragarms 38 an der Oberseite, das heißt der dem Boden abgewandten Seite des Hilfsantriebs 40 gemäß den in den Figuren 1 bis 5 gezeigten Ausführungsbeispielen der Befestigungs- und Abstützvorrichtung ist. Um diese "Untenbefestigung" zu realisieren, weist die Befestigungs- und Abstützvorrichtung 10 wiederum das erste und zweite Abstützelement 18, 34 auf. Die Verbindung dieser beiden Elemente sowie deren Anordnung im Raum ist dabei derart gewählt, dass der Aufnahmestutzen 48 den Tragarm 38 derart positioniert, dass der Hilfsantrieb 40 über das Verbindungselement 50 auf einer Oberseite des Tragarms 38 befestigt werden kann. Die Befestigung des Hilfsantriebs 40 an dem Tragarm 38 wird dabei wiederum derart ausgeführt, dass das Antriebselement 106 im Bereich der Lauffläche 36 des Anhängerrades 30 zu liegen kommt. Man erkennt, dass die Verbindung des ersten Abstützelementes 18 mit dem zweiten Abstützelement 34 über die Schraubverbindung 74 erfolgt, wobei die Schraubverbindung 74 durch korrespondierende miteinander fluchtende Öffnungen 70 in dem ersten beziehungsweise zweiten Abstützelement 18, 34 erfolgt. Der Stoßdämpfer 22 ist wiederum über eine Stoßdämpferschraube 20, die in die Öffnung 32 in dem ersten Abstützelement 18 eingreift, mit diesem verbunden.

Des Weiteren erkennt man, dass das Achsrohrgehäuse 12 wiederum über die erste Befestigungsvorrichtung 16 an dem Längsträger 14 des Stützrahmens 64 befestigt und abgestützt ist. Im Gegensatz zu der in den Figuren 1 bis 5 beschriebenen Befestigung des Tragarms 38 an dem Längsträger 14 ist bei dem hier beschriebenen Ausführungsbeispiel der Tragarm 38 mittels einer Klemmvorrichtung 76 an dem Längsträger 14 befestigt und abgestützt. Insbesondere aus Fig. 7 wird deutlich, dass die Klemmvorrichtung zwei Klemmbacken 110, 114 aufweist, die mittels mehrere Klemmschrauben 112 miteinander verbunden beziehungsweise verklemmt werden. Die Klemmbacken 110, 114 umgreifen dabei zumindest mit einem Teilbereich den Untergurt 90 des Längsträgers 14, wodurch es zu einer Befestigung und Abstützung des Tragarms 38 an dem Untergurt 90 beziehungsweise dem Längsträger 14 kommt. Des Weiteren erkennt man, dass die Klemmbacke 114 auf dem Tragarm 38 aufliegt und mit einem abgewinkelten Endbereich 116 zumindest teilweise an dem Mittelsteg 84 des Längsträgers 12, und zwar in dem dem Hilfsantrieb 40 zugewandten Bereich des Mittelstegs 84, anliegt. Dadurch wird eine sichere Befestigung der Klemmvorrichtung 76 an dem Längsträger 14 gewährleistet. Der Tragarm 38 ist wiederum über eine dritte Befestigungsvorrichtung 104 mit der Querstrebe 102 verbunden.

Die Befestigungs- und Abstützvorrichtung 10 besteht üblicherweise aus Metall oder Kunststoff oder einer Kombination daraus.

## Patentansprüche

1. Befestigungs- und Abstützvorrichtung zur Befestigung und Abstützung eines Hilfsantriebs (40) an mindestens einem Element eines Stützrahmens (64) eines Anhängers, insbesondere einem Wohnwagen, einem Bootsanhänger, einem Verkaufswagen, einem Transportanhänger oder einem Autotransportanhänger, wobei die Befestigungs- und Abstützvorrichtung (10) mindestens ein erstes, an einem Achsrohrgehäuse (12) angeordnetes erstes Abstützelement (18) für einen Stoßdämpfer (22) des Anhängers umfasst, wobei das Achsrohrgehäuse (12) mittels einer ersten Befestigungsvorrichtung (16) an einem Längsträger (14) des Stützrahmens (64) abgestützt und/oder befestigt ist und das erste Abstützelement (18) mit einem zweiten Abstützelement (34) verbunden ist, wobei das zweite Abstützelement (34) zur Aufnahme und Abstützung eines Tragarms (38) des Hilfsantriebs (40) ausgebildet ist.

2. Befestigungs- und Abstützvorrichtung nach Anspruch 1, **dadurch gekennzeichnet, dass** das zweite Abstützelement (34) eine Öffnung zur Aufnahme des Tragarms (38) umfasst oder dass das zweite Abstützelement (34) einen Aufnahmestutzen (48) zur Aufnahme und Abstützung des Tragarms (38) umfasst oder dass das zweite Abstützelement (34) eine Öffnung zur Aufnahme eines am Tragarm (38) angeordneten Aufnahmestutzens umfasst.

3. Befestigungs- und Abstützvorrichtung nach Anspruch 1 oder 2, **dadurch gekennzeichnet, dass** das erste und zweite Abstützelement (18, 34) jeweils mindestens eine korrespondierende Öffnung (32, 66) zur Aufnahme eines Verbindungselements (20) zur gemeinsamen Fixierung des ersten und zweiten Abstützelements (18, 34) sowie eines Endbereichs des Stoßdämpfers (22) umfasst oder dass das erste und zweite Abstützelement (18, 34) jeweils mehrere korrespondierende Öffnungen (32, 66, 68, 70) zur Aufnahme jeweils eines Verbindungselements (20, 72, 74) zur gemeinsamen Fixierung des ersten und zweiten Abstützelements (18, 34) sowie eines Endbereichs des Stoßdämpfers (22) umfasst.

4. Befestigungs- und Abstützvorrichtung nach Anspruch 1 oder 2, **dadurch gekennzeichnet, dass** das erste Abstützelement (18) eine Öffnung (32) zur Aufnahme eines Verbindungselements (20) zur Befestigung eines Endbereichs des Stoßdämpfers (22) an dem ersten Abstützelement (18) sowie mindestens eine weitere Öffnung (76) umfasst, wobei die weitere Öffnung (76) mit einer entsprechenden, in dem zweiten Abstützelement (34) ausgebildeten Öffnung (68, 70) zur Aufnahme eines Verbindungselements (72, 74) zur Fixierung des ersten an dem zweiten Abstützelement (18, 34) ausgebildet ist.

5. Befestigungs- und Abstützvorrichtung nach einem der vorhergehenden Ansprüche, **dadurch gekennzeichnet, dass** das erste Abstützelement (18) und/oder das zweite Abstützelement (34) als Abstützblech oder Abstützwinkel ausgebildet ist.

6. Befestigungs- und Abstützvorrichtung nach einem der Ansprüche 2 bis 5, **dadurch gekennzeichnet, dass** der Aufnahmestutzen (48) einen geschlossenen oder offenen Querschnitt aufweist und/oder dass die Querschnittsform des Aufnahmestutzens (48) einer Querschnittsform des Tragarms (38) entspricht und/oder dass ein Innendurchmesser des Aufnahmestutzens (48) einem Außendurchmesser des Tragarms (38) des Hilfsantriebs (40) entspricht oder geringfügig größer ist.

7. Befestigungs- und Abstützvorrichtung nach einem der Ansprüche 2 bis 6, **dadurch gekennzeichnet, dass** in dem Aufnahmestutzen (48) und/oder einem an dem Aufnahmestutzen (48) angeordnetem Verstärkungselement (46) mindestens eine Gewindebohrung (44) zur Aufnahme einer Fixierschraube (42) ausgebildet ist.

8. Befestigungs- und Abstützvorrichtung nach einem der vorhergehenden Ansprüche, **dadurch gekennzeichnet, dass** der Tragarm (38) des Hilfsantriebs (40) mittels einer zweiten Befestigungsvorrichtung (52) an einem Längsträger (14) des Stützrahmens (64) abgestützt und/oder befestigt ist oder dass der Tragarm (38) des Hilfsantriebs (40) mittels einer zweiten Befestigungsvorrichtung (52) an einem Längsträger (14) des Stützrahmens (64) abgestützt und/oder befestigt ist.

9. Befestigungs- und Abstützvorrichtung nach Anspruch 8 **dadurch gekennzeichnet, dass** die zweite Befestigungsvorrichtung (52) mindestens zwei miteinander verbindbare Halteelemente (54, 58) umfasst und die Halteelemente (54, 58) derart ausgebildet sind, dass sie in montiertem Zustand mit jeweils einer Halteplatte (80, 82) zumindest teilweise an einem aufrecht verlaufenden Mittelsteg (84) des Längsträgers (14) beidseitig anliegen und eine der Halteplatten (82) einen Führungsstutzen (56) zur Aufnahme des Tragarms (38) und die andere Halteplatte (80) eine korrespondierende Öffnung (60) zur Aufnahme und den Durchtritt des Führungsstutzens (56) aufweist, wobei der Führungsstutzen (56) derart an der Halteplatte (82) angeordnet ist, dass er durch eine korrespondierende Öffnung im Mittelsteg (84) des Längsträgers (14) durchführbar ist
oder
dass die zweite Befestigungsvorrichtung (52) mindestens zwei miteinander verbindbare Halteelemente (54, 58) umfasst und die Halteelemente (54, 58) derart ausgebildet sind, dass sie in montiertem Zustand mit jeweils einer Halteplatte (80, 82) zumindest teilweise an einem aufrecht verlaufenden Mittelsteg (84) des Längsträgers (14) beidseitig anliegen und eine der Halteplatten (82) einen Führungsstutzen (56) zur Aufnahme des Tragarms (38) und die andere Halteplatte (80) eine korrespondierende Öffnung (60) zur Aufnahme und den Durchtritt des Führungsstutzens (56) aufweist, wobei der Führungsstutzen (56) derart an der Halteplatte (82) angeordnet ist, dass er durch eine korrespondierende Öffnung im Mittelsteg (84) des Längsträgers (14) durchführbar ist und die Halteelemente (54, 58) jeweils quer von den Halteplatten (80, 82) abstehende untere Profilschenkel (86, 88) aufweisen, die derart ausgebildet sind, dass sie in montiertem Zustand einen von dem Mittelsteg (84) des Längsträgers (14) quer abstehenden Untergurt (90) umfassen.

10. Befestigungs- und Abstützvorrichtung nach Anspruch 9, **dadurch gekennzeichnet, dass** die unteren Profilschenkel (86, 88) derart ausgebildet sind, dass sie in montiertem Zustand jeweils an einer vom Mittelsteg (14) abgewandten Kante (92) des Untergurts (90) enden und/oder darüber hinausragen und/oder dass die unteren Profilschenkel (86, 88) derart ausgebildet sind, dass sie in montiertem Zustand zumindest teilweise an dem Untergurt (90) beidseitig anliegen und/oder dass die unteren Profilschenkel (86, 88) form- oder kraftschlüssig miteinander verbindbar sind und/oder dass die unteren Profilschenkel (86, 88) form- oder kraftschlüssig miteinander verbindbar sind und die unteren Profilschenkel (86, 88) mittels mindestens einer Schraub- und/oder Klemmverbindung (94) lösbar miteinander verbindbar sind.

11. Befestigungs- und Abstützvorrichtung nach Anspruch 9 oder 10, **dadurch gekennzeichnet, dass** der Führungsstutzen (56) einen geschlossenen oder offenen Querschnitt aufweist oder dass der Führungsstutzen (56) einen geschlossenen oder offenen Querschnitt aufweist und eine Querschnittsform des Führungsstutzens (56) einer Querschnittsform des Tragarms (38) entspricht.

12. Befestigungs- und Abstützvorrichtung nach Anspruch 11, **dadurch gekennzeichnet, dass** eine Form der Öffnung (60) in der Halteplatte (80) des Halteelements (54) der Querschnittsform des Führungsstutzens (56) entspricht.

13. Befestigungs- und Abstützvorrichtung nach einem der Ansprüche 9 bis 12, **dadurch gekennzeichnet, dass** ein Innendurchmesser des Führungsstutzens (56) einem Außendurchmesser des Tragarms (38) des Hilfsantriebs (40) entspricht oder geringfügig größer ist oder dass in dem Führungsstutzen (56) und/oder einem an dem Führungsstutzen (56) angeordnetem Verstärkungselement (96) mindestens eine Gewindebohrung (98) zur Aufnahme einer Fixierschraube (100) ausgebildet ist.

14. Befestigungs- und Abstützvorrichtung nach Anspruch 8, **dadurch gekennzeichnet, dass** die zweite Befestigungsvorrichtung (52) mindestens eine Klemmvorrichtung umfasst.

15. Anhänger, insbesondere Wohnwagen, Bootsanhänger, Verkaufswagen, Transportanhänger oder Autotransportanhänger, umfassend mindestens einen Hilfsantrieb (40) und mindestens eine Befestigungs- und Abstützvorrichtung (10) gemäß einem der den Ansprüche 1 bis 14 zur Befestigung und Abstützung des Hilfsantriebs (40) an einem Element eines Stützrahmens (64) des Anhängers.

16. Anhänger nach Anspruch 15, **dadurch gekennzeichnet, dass** der Stützrahmen (64) mindestens zwei parallel zueinander verlaufende Längsträger (14) umfasst oder dass der Stützrahmen (64) zwei V-förmig zueinander angeordnete Längsträger (14) umfasst und/oder dass der Stützrahmen (64) zumindest teilweise aus einem Leichtmetall, einem faserverstärktem Kunststoff oder einer Kombination aus diesen Materialien besteht.

17. Anhänger nach Anspruch 15 oder 16, **dadurch gekennzeichnet, dass** die Befestigungs- und Abstützvorrichtung (10) zwischen dem Längsträger (14) und einem Anhängerrad (30) angeordnet ist, derart, dass ein Antriebselement (106) des Hilfsantriebs (40) in einem Bereich einer Lauffläche (108) des Anhängerrads (30) positioniert ist.

18. Stützrahmen eines Anhängers, insbesondere eines Wohnwagens, eines Bootsanhängers, eines Verkaufswagens, eines Transportanhängers oder eines Autotransportanhängers, umfassend mindestens eine Befestigungs- und Abstützvorrichtung (10) gemäß einem der Ansprüche 1 bis 14 zur Befestigung und Abstützung eines Hilfsantriebs (40) an einem Element des Stützrahmens (64).

19. Stützrahmen nach Anspruch 18, **dadurch gekennzeichnet, dass** der Stützrahmen (64) mindestens zwei parallel zueinander verlaufende Längsträger (14) umfasst oder dass der Stützrahmen (64) zwei V-förmig zueinander angeordnete Längsträger (14) umfasst und/oder dass der Stützrahmen (64) zumindest teilweise aus einem Leichtmetall, einem faserverstärktem Kunststoff oder einer Kombination aus diesen Materialien besteht.

## Claims

1. A securing and supporting device for securing and supporting an auxiliary drive (40) on at least one element of a supporting frame (64) of a trailer, in particular a caravan, a boat trailer, a sales vehicle, a transport tailer or a car transport trailer, wherein the securing and supporting device (10) includes at least one first supporting element (18) for a shock absorber (22) of the trailer, arranged at an axle tube housing (12), wherein the axle tube housing (12) is supported on and/or secured to a longitudinal beam (14) of the supporting frame (64) by means of a first fastening device (16) and the first supporting element (18) is connected to a second supporting element (34), wherein the second supporting element (34) is formed for receiving and supporting a carrying arm (38) of the auxiliary drive (40).

2. The securing and supporting device according to claim 1, **characterized in that** the second supporting element (34) includes an opening for receiving the carrying arm (38) or that the second supporting element (34) includes a receiving socket (48) for receiving and supporting the carrying arm (38) or that the second supporting element (34) includes an opening for receiving a receiving socket arranged at the carrying arm (38).

3. The securing and supporting device according to claim 1 or 2, **characterized in that** the first and the second supporting element (18, 34) each include at least one corresponding opening (32, 66) for receiving a connecting element (20) for commonly fixing the first and the second supporting element (18, 34) as well as an end region of the shock absorber (22), or that the first and the second supporting element (18, 34) each include multiple corresponding openings (32, 66, 68, 70) for receiving each one connecting element (20, 72, 74) for commonly fixing the first and the second supporting element (18, 34) as well as an end region of the shock absorber (22).

4. The securing and supporting device according to claim 1 or 2, **characterized in that** the first supporting element (18) includes an opening (32) for receiving a connecting element (20) for securing an end region of the shock absorber (22) to the first supporting element (18) as well as at least one further opening (76), wherein the further opening (76) is formed with a corresponding opening (68, 70) formed in the second supporting element (34) for receiving a connecting element (72, 74) for fixing the first to the second supporting element (18, 34).

5. The securing and supporting device according to any one of the preceding claims, **characterized in that** the first supporting element (18) and/or the second supporting element (34) are formed as a supporting sheet or supporting angle.

6. The securing and supporting device according to any one of claims 2 to 5, **characterized in that** the receiving socket (48) has a closed or open cross-section and/or that the cross-sectional shape of the receiving socket (48) corresponds to a cross-sectional shape of the carrying arm (38) and/or that an internal diameter of the receiving socket (48) corresponds to or is slightly larger than an external diameter of the carrying arm (38) of the auxiliary drive (40).

7. The securing and supporting device according to any one of claims 2 to 6, **characterized in that** at least one threaded bore (44) for receiving a fixing screw (42) is formed in the receiving socket (48) and/or a reinforcing element (46) arranged at the receiving socket (48).

8. The securing and supporting device according to any one of the preceding claims, **characterized in that** the carrying arm (38) of the auxiliary drive (40) is supported on and/or secured to a longitudinal beam (14) of the supporting frame (64) by means of a second fastening device (52) or that the carrying arm (38) of the auxiliary drive (40) is supported on and/or secured to a longitudinal beam (14) of the supporting frame (64) by means of a second fastening device (52).

9. The securing and supporting device according to claim 8, **characterized in that** the second fastening device (52) includes at least two retaining elements (54, 58) connectable to each other and the retaining elements (54, 58) are formed such that they at least partially abut on an uprightly extending central web (84) of the longitudinal beam (14) on both sides with each one retaining plate (80, 82) in the mounted state, and one of the retaining plates (82) comprises a guiding socket (56) for receiving the carrying arm (38) and the other retaining plate (80) comprises a corresponding opening (60) for receiving and the passage of the guiding socket (56), wherein the guiding socket (56) is arranged at the retaining plate (82) such that it can be passed through a corresponding opening in the central web (84) of the longitudinal beam (14),
or
that the second fastening device (52) includes at least two retaining elements (54, 58) connectable to each other and the retaining elements (54, 58) are formed such that they at least partially abut on an uprightly extending central web (84) of the longitudinal beam (14) on both sides with each one retaining plate (80, 82) in the mounted state, and one of the retaining plates (82) comprises a guiding socket (56) for receiving the carrying arm (38) and the other retaining plate (80) comprises a corresponding opening (60) for receiving and the passage of the guiding socket (56), wherein the guiding socket (56) is arranged at the retaining plate (82) such that it can be passed through a corresponding opening in the central web (84) of the longitudinal beam (14) and the retaining elements (54, 58) each comprise lower profile legs (86, 88) transversely protruding from the retaining plates (80, 82), which are formed such that they encompass a bottom chord (90) transversely protruding from the central web (84) of the longitudinal beam (14) in the mounted state.

10. The securing and supporting device according to claim 9, **characterized in that** the lower profile legs (86, 88) are formed such that they each terminate at and/or protrude beyond an edge (92) of the bottom chord (90) facing away from the central web (14) in the mounted state and/or that the lower profile legs (86, 88) are formed such that they at least partially abut on the bottom chord (90) on both sides in the mounted state and/or that the lower profile legs (86, 88) are connectable to each other in form- or force-fit manner and/or that the lower profile legs (86, 88) are connectable to each other in form- or force-fit manner and the lower profile legs (86, 88) are detachably connectable to each other by means of at least one screw and/or clamp connection (94).

11. The securing and supporting device according to claim 9 or 10, **characterized in that** the guiding socket (56) has a closed or open cross-section or that the guiding socket (56) has a closed or open cross-section and a cross-sectional shape of the guiding socket (56) corresponds to a cross-sectional shape of the carrying arm (38).

12. The securing and supporting device according to claim 11, **characterized in that** a shape of the opening (60) in the retaining plate (80) of the retaining element (54) corresponds to the cross-sectional shape of the guiding socket (56).

13. The securing and supporting device according to any one of claims 9 to 12, **characterized in that** an internal diameter of the guiding socket (56) corresponds to or is slightly larger than an external diameter of the carrying arm (38) of the auxiliary drive (40) or that at least one threaded bore (98) for receiving a fixing screw (100) is formed in the guiding socket (56) and/or a reinforcing element (96) arranged at the guiding socket (56).

14. The securing and supporting device according to claim 8, **characterized in that** the second fastening device (52) includes at least one clamping device.

15. A trailer, in particular caravan, boat trailer, sales vehicle, transport trailer or car transport trailer, including at least one auxiliary drive (40) and at least one securing and supporting device (10) according to any one of claims 1 to 14 for securing and supporting the auxiliary drive (40) on an element of a supporting frame (64) of the trailer.

16. The trailer according to claim 15, **characterized in that** the supporting frame (64) includes at least two longitudinal beams (14) extending parallel to each other or that the supporting frame (64) includes two longitudinal beams (14) arranged V-shaped to each other and/or that the supporting frame (64) is at least partially composed of a light metal, a fiber-reinforced plastic or a combination of these materials.

17. The trailer according to claim 15 or 16, **characterized in that** the securing and supporting device (10) is arranged between the longitudinal beam (14) and a trailer wheel (30) such that a drive element (106) of the auxiliary drive (40) is positioned in an area of a tread (108) of the trailer wheel (30).

18. A supporting frame of a trailer, in particular of a caravan, a boat trailer, a sales vehicle, a transport trailer or a car transport trailer, including at least one securing and supporting device (10) according to any one of claims 1 to 14 for securing and supporting an auxiliary drive (40) on an element of the supporting frame (64).

19. The supporting frame according to claim 18, **characterized in that** the supporting frame (64) includes at least two longitudinal beams (14) extending parallel to each other or that the supporting frame (64) includes two longitudinal beams (14) arranged V-shaped to each other and/or that the supporting frame (64) is at least partially composed of a light metal, a fiber-reinforced plastic or a combination of these materials.

## Revendications

1. Dispositif de fixation et d'appui pour fixer et appuyer un entraînement auxiliaire (40) à au moins un élément d'un cadre de support (64) d'une remorque, surtout d'une caravane, d'une remorque de bateaux, d'une remorque de vente, d'une remorque de transport ou d'une remorque de voitures, dans lequel le dispositif de fixation et d'appui (10) comporte au moins un premier élément d'appui (18) pour un absorbeur de chocs (22) de la remorque, dans lequel l'élément d'appui (18) est agencé à un carter de tube d'essieu (12), dans lequel le carter de tube d'essieu (12) est appuyé et/ou fixé à un longeron (14) du cadre de support (64) au moyen d'un premier dispositif de fixation (16), et le premier élément d'appui (18) est lié à un second élément d'appui (34), dans lequel le second élément d'appui (34) est configuré pour la réception et l'appui d'un bras de support (38) de l'entraînement auxiliaire (40).

2. Dispositif de fixation et d'appui selon la revendication 1, **caractérisé en ce que** le second élément d'appui (34) comporte une ouverture pour la réception du bras de support (38), ou que le second élément d'appui (34) comporte une tubulure de réception (48) pour la réception et l'appui du bras de support (38), ou que le second élément d'appui (34) comporte une ouverture pour la réception d'une tubulure de réception agencée au bras de support (38).

3. Dispositif de fixation et d'appui selon la revendication 1 ou 2, **caractérisé en ce que** le premier et le second élément d'appui (18, 34) chacun comporte au moins une ouverture correspondante (32, 66) pour la réception d'un élément de liaison (20) pour une fixation commune du premier et du second élément d'appui (18, 34), ainsi que d'une zone terminale de l'absorbeur de chocs (22), ou que le premier et le second élément d'appui (18, 34) chacun comporte plusieurs ouvertures correspondantes (32, 66, 68, 70) pour la réception d'un élément de liaison (20, 72, 74) chacun pour une fixation commune du premier et du second élément d'appui (18, 34), ainsi que d'une zone terminale de l'absorbeur de chocs (22).

4. Dispositif de fixation et d'appui selon la revendication 1 ou 2, **caractérisé en ce que** le premier élément d'appui (18) comporte une ouverture (32) pour la réception d'un élément de liaison (20) pour la fixation d'une zone terminale de l'absorbeur de chocs (22) au premier élément d'appui (18), ainsi que au moins une ouverture supplémentaire (76), dans lequel l'ouverture supplémentaire (76) est configurée avec une ouverture correspondante (68, 70) configurée dans le second élément d'appui (34) pour la réception d'un élément de liaison (72, 74) pour la fixation du premier élément d'appui (18) au second élément d'appui (34).

5. Dispositif de fixation et d'appui selon l'une quelconque des revendications précédentes, **caractérisé en ce que** le premier élément d'appui (18) et/ou le second élément d'appui (34) est conçu en tant que tôle de support ou en tant qu'équerre de support.

6. Dispositif de fixation et d'appui selon l'une quelconque des revendications 2 à 5, **caractérisé en ce que** la tubulure de réception (48) comporte une section transversale fermée ou une section transversale ouverte, et/ou que la forme de la section transversale de la tubulure de réception (48) correspond à une forme de la section transversale du bras de support (38), et/ou qu'un diamètre intérieur de la tubulure de réception (48) correspond à un diamètre extérieur du bras de support (38) de l'entraînement auxiliaire (40) ou est légèrement plus grand.

7. Dispositif de fixation et d'appui selon l'une quelconque des revendications 2 à 6, **caractérisé en ce que** dans la tubulure de réception (48) et/ou à un élément de renforcement (46) agencé à la tubulure de réception (48) au moins un alésage fileté (44) est formé pour la réception d'un vis de fixation (42).

8. Dispositif de fixation et d'appui selon l'une quelconque des revendications précédentes, **caractérisé en ce que** le bras de support (38) de l'entraînement auxiliaire (40) est appuyé et/ou fixé à un longeron (14) du cadre de support (64) au moyen d'un second dispositif de fixation (52), ou que le bras de support (38) de l'entraînement auxiliaire (40) est appuyé et/ou fixé à un longeron (14) du cadre de support (64) au moyen d'un second dispositif de fixation (52).

9. Dispositif de fixation et d'appui selon la revendication 8, **caractérisé en ce que** le second dispositif de fixation (52) comporte au moins deux éléments de retenue (54, 58), qui peuvent être liés l'un par rapport à l'autre, et que les éléments de retenue (54, 58) sont conçus de sorte que, lorsqu'ils sont montés, ils adhèrent uniformément sur les deux côtés avec une plaque de retenue (80, 82) chacun au moins partiellement à une âme centrale (84), s'étendant de façon verticale, du longeron (14), et qu'une des plaques de retenue (82) comporte une tubulure de guidage (56) pour la réception du bras de support (38), et que l'autre plaque de retenue (80) comporte une ouverture correspondante (60) pour la réception et le passage de la tubulure de guidage (56), dans lequel la tubulure de guidage (56) est agencée à la plaque de retenue (82) de sorte qu'elle peut être passée à travers une ouverture correspondante dans l'âme centrale (84) du longeron (14),
ou
**que** le second dispositif de fixation (52) comporte au moins deux éléments de retenue (54, 58), qui peuvent être liés l'un avec l'autre, et que les éléments de retenue (54, 58) sont conçus de sorte que, lorsqu'ils sont montés, ils adhèrent uniformément sur les deux côtés avec une plaque de retenue (80, 82) chacun au moins partiellement à une âme centrale (84), s'étendant de façon verticale, du longeron (14), et qu'une des plaques de retenue (82) comporte une tubulure de guidage (56) pour la réception du bras de support (38), et que l'autre plaque de retenue (80) comporte une ouverture correspondante (60) pour la réception et le passage de la tubulure de guidage (56), dans lequel la tubulure de guidage (56) est agencée à la plaque de retenue (82) de sorte qu'elle peut être passée à travers une ouverture correspondante dans l'âme centrale (84) du longeron (14), et que les éléments de retenue (54, 58) comportent chacun des branches profilées inférieures (86, 88) s'étendant transversalement à partir des plaques de retenue (80, 82), qui sont conçues de sorte qu'elles comportent, lorsqu'elles sont montées, une membrure inférieure (90) s'étendant transversalement à partir de l'âme centrale (84) du longeron (14).

10. Dispositif de fixation et d'appui selon la revendication 9, **caractérisé en ce que** les branches profilées inférieures (86, 88) sont conçues de sorte qu'elles se terminent, lorsqu'elles sont montées, chacune à un bord (92) tourné dans la direction opposée de l'âme centrale (14) de la membrure inférieure (90), et / ou le dépasse et / ou que les branches profilées inférieures (86, 88) sont conçues de sorte qu'elles adhèrent, lorsqu'elles sont montées, uniformément sur les deux côtés à la membrure inférieure (90) au moins partiellement et / ou que les branches profilées inférieures (86, 88) peuvent être liées l'une avec l'autre à engagement positif ou par liaison de force, et / ou que les branches profilées inférieures (86, 88) peuvent être liées l'une avec l'autre à engagement positif ou par liaison de force et que les branches profilées inférieures (86, 88) peuvent être liées l'une avec l'autre de manière amovible au moyen au moins d'un raccord vissé et / ou d'un raccord par serrage (94).

11. Dispositif de fixation et d'appui selon la revendication 9 ou 10, **caractérisé en ce que** la tubulure de guidage (56) comporte une section transversale fermée ou une section transversale ouverte, ou que la tubulure de guidage (56) comporte une section transversale fermée ou une section transversale ouverte, et qu'une forme de la section transversale de la tubulure de guidage (56) correspond à une forme de la section transversale du bras de support (38).

12. Dispositif de fixation et d'appui selon la revendication 11, qu'une forme de l'ouverture (60) dans la plaque de retenue (80) de l'élément de retenue (54) correspond à la forme de la section transversale de la tubulure de guidage (56).

13. Dispositif de fixation et d'appui selon l'une quelconque des revendications 9 à 12, **caractérisé en ce qu'**un diamètre intérieur de la tubulure de guidage (56) correspond à un diamètre extérieur du bras de support (38) de l'entraînement auxiliaire (40), ou est légèrement plus grand, ou que dans la tubulure de guidage (56) et / ou à un élément de renforcement (96) agencé à la tubulure de guidage (56) au moins un alésage fileté (98) est formé pour la réception d'un vis de fixation (100).

14. Dispositif de fixation et d'appui selon la revendication 8, **caractérisé en ce que** le second dispositif de fixation (52) comporte au moins un dispositif de serrage.

15. Remorque, surtout une caravane, une remorque de bateaux, une remorque de vente, une remorque de transport ou une remorque de voitures, comportant au moins un entraînement auxiliaire (40), et au moins un dispositif de fixation et d'appui (10) selon l'une quelconque des revendications 1 à 14 pour la fixation et l'appui de l'entraînement auxiliaire (40) à un élément d'un cadre de support (64) de la remorque.

16. Remorque selon la revendication 15, **caractérisé en ce que** le cadre de support (64) comporte au moins deux longerons (14) s'étendant parallèlement l'un par rapport à l'autre, ou que le cadre de support (64) comporte deux longerons (14) agencés en forme de V l'un par rapport à l'autre, et / ou que le cadre de support (64) au moins partiellement est réalisé en un métal léger, une matière plastique renforcée de fibres, ou une combinaison de ces matériaux.

17. Remorque selon la revendication 15 ou 16, **caractérisé en ce que** le dispositif de fixation et d'appui (10) est agencé entre le longeron (14) et une roue de la remorque (30), de sorte qu'un élément d'entraînement (106) de l'entraînement auxiliaire (40) est positionné dans une zone d'une surface de roulement (108) de la roue de remorque (30).

18. Cadre de support d'une remorque, surtout d'une caravane, d'une remorque de bateaux, d'une remorque de vente, d'une remorque de transport ou d'une remorque de voitures, comportant au moins un dispositif de fixation et d'appui (10) selon l'une quelconque des revendications 1 à 14 pour la fixation et l'appui d'un entraînement auxiliaire (40) à un élément du cadre de support (64).

19. Cadre de support selon la revendication 18, **caractérisé en ce que** le cadre de support (64) comporte au moins deux longerons (14) s'étendant parallèlement l'un par rapport à l'autre, ou que le cadre de support (64) comporte deux longerons (14) agencés en forme de V l'un par rapport à l'autre, et / ou que le cadre de support (64) au moins partiellement est réalisé en un métal léger, une matière plastique renforcée de fibres, ou une combinaison de ces matériaux.
